# EUROPEAN PATENT SPECIFICATION

(11) **EP 4 283 745 B1**
(45) Date of publication and mention of the grant of the patent: **09.09.2026**
(21) Application number: 22922548.7
(22) Date of filing: 08.04.2022
(51) Int. Cl.: H01M 10/0567, H01M 10/056, H01M 10/04, H01M 10/052

(54) **ELECTROLYTE SOLUTION, SECONDARY BATTERY, BATTERY MODULE, BATTERY PACK, AND ELECTRIC DEVICE**
ELEKTROLYTLÖSUNG, SEKUNDÄRBATTERIE, BATTERIEMODUL, BATTERIEPACK UND ELEKTRISCHE VORRICHTUNG
SOLUTION ÉLECTROLYTIQUE, BATTERIE SECONDAIRE, MODULE DE BATTERIE, BLOC-BATTERIE ET DISPOSITIF ÉLECTRIQUE

(43) Date of publication of application: 29.11.2023
(73) Proprietor: Contemporary Amperex Technology (Hong Kong) Limited, Central, Central And Western District (HK)
(72) Inventor: ZHANG, Ming, Ningde, Fujian 352100 (CN); WU, Qifan, Ningde, Fujian 352100 (CN)
(74) Representative: Jacob, Reuben Ellis
(86) International application number: PCT/CN2022/085783
(87) International publication number: WO 2023/193230

(56) References cited:
- EP-A1- 3 940 846
- WO-A1-2015/016189
- WO-A1-2015/016189
- WO-A1-2015/074006
- WO-A1-2020/163879
- WO-A1-2021/069469
- WO-A1-2021/100362
- CN-A- 1 567 642
- CN-A- 1 567 642
- CN-A- 109 417 199
- JP-A- 2000 182 668
- US-A1- 2005 089 758
- US-A1- 2020 203 703
- US-A1- 2021 313 611

## Description

### TECHNICAL FIELD

This application relates to the technical field of battery, in particular to an electrolyte, a secondary battery, a battery module, a battery pack and an electrical device.

### BACKGROUND

A secondary battery has characteristics of high capacity and long life, so it is widely used in an electronic equipment, such as mobile phones, notebook computers, battery cars, electric cars, electric aircrafts, electric ships, electric toy cars, electric toy ships, electric toy aircrafts and electric tools. Due to the great progress of the secondary battery, higher requirements are put forward for the performance of the secondary battery. In order to improve the performance of the secondary battery, the materials such as an electrolyte in the secondary battery are usually optimized and improved. The electrolyte, as the transport medium of metal ions in the secondary battery, has a non-negligible effect on the performance of the secondary battery. CN 1567642 relates to a non aqueous electrolyte for a lithium secondary battery.

However, when the improved electrolyte is applied to the secondary battery, the low temperature performance and service life of the secondary battery cannot be improved simultaneously during the use.

### SUMMARY

In order to solve the above problems, the present application provides an electrolyte, a secondary battery, a battery module, a battery pack and an electrical device.

The invention is defined in the appended claims. A first aspect of the present application provides an electrolyte for use in a secondary battery, wherein the electrolyte comprises a C2-C4 alkene substituted with a halogen atom and a partially halogenated saturated polyalkene.

Thus, in an embodiment of the present application, the electrolyte is provided with the C2-C4 alkene substituted with a halogen atom and the partially halogenated saturated polyalkene, which can undergo an electrochemical reduction reaction on a surface of a negative electrode active material to generate a halogen-containing solid electrolyte interphase. On the one hand, the generated halogen-containing solid electrolyte interphase has lower interface resistance, which makes the secondary battery have a better low temperature performance. On the other hand, it can reduce the risk of a direct contact between the electrolyte and the negative electrode active material, reduce the risk of a reduction reaction of the electrolyte, thereby improving the life of secondary battery.

In an embodiment of the present application, by adding a partially halogenated saturated polyolefin to the electrolyte, an electrochemical reduction reaction may produce on the surface of the negative electrode active material to generate a solid electrolyte interphase. The partially halogenated saturated polyolefin has a certain viscosity, and may improve a binding force between the negative electrode active material and the solid electrolyte interphase, thereby improving a reliability of a formation of the solid electrolyte interphase in the charge and discharge process of the secondary battery, and improving an electrochemical performance of the secondary battery. Thus, low temperature performance and service life can be improved.

In any embodiment, the C2-C4 alkene substituted with a halogen atom comprises one or more of compounds represented by Formula I, 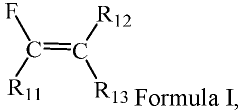
wherein R₁₁ to R₁₃ are each independently selected from a hydrogen atom, a halogen atom, or a halogen atom substituted or unsubstituted C1-C2 alkyl, and a number of carbon atoms in R₁₁ to R₁₃ adds up to 0, 1 or 2; optionally, the halogen atom comprises a fluorine atom or a chlorine atom; and
optionally, R₁₁ to R₁₃ are each independently selected from a hydrogen atom, a fluorine atom, or -CF3.

Thus, in an embodiment of the present application, the C2-C4 alkene substituted with a halogen atom is more easily controlled in its solubility in electrolyte and facilitates its electrochemical reaction with the negative electrode active material.

In any embodiment, the C2-C4 alkene substituted with a halogen atom comprises one or more compounds represented by Formulas (I-1) to (I-5),

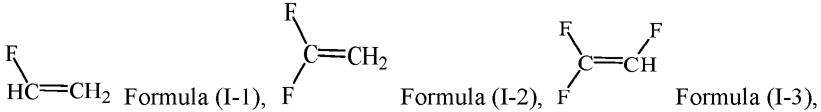

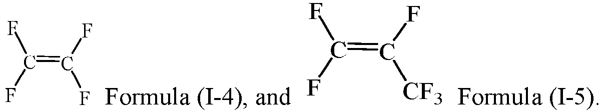

In any embodiment, the C2-C4 alkene substituted with a halogen atom has a mass percentage *a* that satisfies 0.05%≤*a*≤10%, and optionally 0.1%≤*a*≤1%, by weight of the electrolyte.

Thus, in an embodiment of the present application, by adjusting the mass percentage of the C2-C4 alkene substituted with a halogen atom to the above range of the mass percentage, the C2-C4 alkene substituted with a halogen atom may be stably dissolved in the electrolyte, and may form a dense protective film on the surface of the negative electrode active material, thereby playing a good protective role on the negative electrode plate.

In any embodiment, the partially halogenated saturated polyolefin comprises one or more of a structural unit represented by Formula II, and the partially halogenated saturated polyolefin comprises at least one structural unit of a partially halogenated alkene, 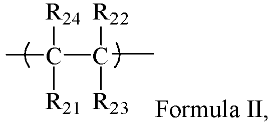 wherein R₂₁ to R₂₄ are each independently selected from a hydrogen atom, a halogen atom, or a linear or branched C1-C8 alkyl substituted or unsubstituted with a halogen atom; optionally, the halogen atom comprises a fluorine atom or a chlorine atom; and optionally, R₂₁ to R₂₄ are each independently selected from a hydrogen atom, a fluorine atom, or -CF3; and the partially halogenated saturated polyolefin has a total polymerization degree *m* that satisfies 1 < *m* ≤ 220, and *m* is a positive integer; optionally, 4 < *m*≤220.

Thus, in an embodiment of the present application, the partially halogenated saturated polyalkene has a relatively low molecular weight and a relatively high solubility with other substances in the electrolyte. It is beneficial to control an electrochemical reduction reaction of the partially halogenated saturated polyalkene on the surface of the negative electrode active material.

In any embodiment, the partially halogenated saturated polyolefin comprises one or more of the structural unit represented by Formulas (II-1) to (II-5), and the partially halogenated saturated polyolefin comprises at least one structural unit of a partially fluorinated alkene;

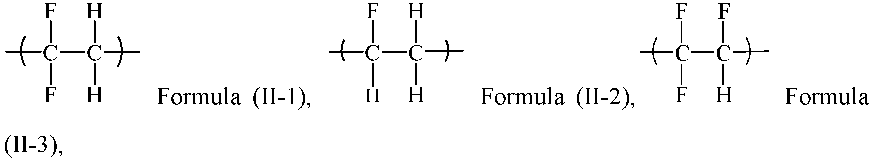

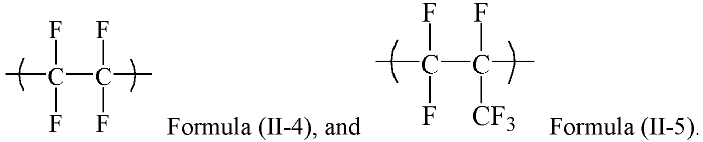

In any embodiment, the partially halogenated saturated polyolefin has a weight average molecular weight of less than or equal to 10000Da; and optionally, the partially halogenated saturated polyolefin has a weight average molecular weight of 200Da to 10000Da.

In any embodiment, the partially halogenated saturated polyolefin has a mass percentage b that satisfies 0.05%≤*a*≤10%, optionally, 0.1%≤*a*≤1%, by weight of the electrolyte.

Thus, in an embodiment of the present application, the partially halogenated saturated polyalkene has a relatively low weight average molecular weight, and it is more easily dissolved in the electrolyte, thereby facilitating the formation of a solid electrolyte interphase by an electrochemical reaction on the surface of the negative electrode active material.

A second aspect of the present application provides a secondary battery comprising a positive electrode plate, a negative electrode plate, a separator and an electrolyte. The separator is arranged between the positive electrode plate and the negative electrode plate. The electrolyte is the electrolyte in any embodiment of the first aspect of the present application; and optionally, the positive electrode plate comprises a lithium element and/or a sodium element.

A third aspect of the application provides a battery module, comprising the secondary battery in an embodiment of the second aspect of the present application.

A fourth aspect of the application provides a battery pack, comprising the battery module in an embodiment of the third aspect of the present application.

A fifth aspect of the application provides an electrical device, comprising the secondary battery in an embodiment of the second aspect of the present application, the battery module in an embodiment of the third aspect of the present application, or a battery pack in an embodiment of the fourth aspect of the present application.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Fig. 1 is a schematic diagram of a secondary battery according to an embodiment of the present application.
Fig. 2 is a decomposition diagram of the secondary battery according to an embodiment of the present application as shown in Fig. 1.
Fig. 3 is a schematic diagram of a battery module according to an embodiment of the present application.
Fig. 4 is a schematic diagram of a battery pack according to an embodiment of the present application.
Fig. 5 is a decomposition diagram of the battery pack according to an embodiment of the present application as shown in Fig. 4.
Fig. 6 is a schematic diagram of an electrical device according to an embodiment of the present application.

In the drawings, reference numerals are explained as follows:
1- secondary battery; 11- outer package; 111- top cover assembly; 112- case; 12-electrode assembly; 10- battery module; 20- battery pack; 21- upper casing; 22- lower casing; 30- electrical device.

### DETAILED DESCRIPTION

Hereinafter, embodiments of the electrolyte, the secondary battery, the battery and the electrical device that specifically disclose the present application will be described in detail. However, unnecessary detailed descriptions may be omitted in some cases, for example the detailed description of a well-known item or the repetitive description of an actual identical structure so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "ranges" disclosed in this application are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution. Unless stated otherwise, all technical features and optional technical features of the present application can be combined with each other to form a new technical solution.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "comprising" mentioned in the present application means that it is drafted in an open mode or in a close mode. For example, the transition phases "comprising" and "comprising" may mean that other components not listed may also be included or contained, or only the listed components may be included or contained.

In the present application herein, unless otherwise stated, the term "or" is inclusive. For example, the phrase "A or B" means A, B, or both A and B". More specifically, either of the following conditions meets "A or B ": A is true (or present) and B is false (or absent); A is false (or absent) and B is true (or present); or both A and B are true (or present).

### Electrolyte

In a first aspect, the present application provides an electrolyte for use in a secondary battery, wherein the electrolyte comprises a C2-C4 alkene substituted with a halogen atom and a partially halogenated saturated polyalkene.

It is understood that the electrolyte may comprise the C2-C4 alkene substituted with a halogen atom; the electrolyte may comprise a partially halogenated saturated polyalkene; or the electrolyte may comprise the C2-C4 alkene substituted with a halogen atom and the partially halogenated saturated polyalkene.

The C2-C4 alkene substituted with a halogen atom refers to one or more hydrogen atoms in C2-C4 alkene are substituted with a halogen atom. When two or more hydrogen atoms are substituted with a halogen atom, hydrogen atoms at different positions may be substituted with different halogen atoms. For example, one hydrogen atom is substituted with fluorine atom F, and the other hydrogen atom is substituted with bromine atom Br. The C2-C4 alkene refers to one or more of ethylene, propylene, and butene. The halogen atoms may be fluorine atoms, chlorine atoms, and the like. As a example, C2-C4 alkene substituted with a halogen atom may be one or more of fluoroethene, 1,1-difluoroethylene, 1,2-difluoroethylene, perfluoroethylene, fluoropropylene, 1,1-difluoropropylene, 1,2,3-trifluoropropylene, fluorobutene, chloroethylene, 1,1-dichloroethylene, 1,2-dichloroethylene, perchloroethylene, chloropropene, 1,1-dichloropropylene, 1,2,3-trichloropropylene, and chloroprene. It should be noted that the above is only illustrative and is not used to limit the range of C2-C4 alkene substituted with a halogen atom.

The C2-C4 alkene substituted with a halogen atom, in a gaseous state and as a negative electrode film forming additive of the electrolyte, can undergo an electrochemical reduction reaction on the surface of the negative electrode active material to generate a halogen-containing solid electrolyte interphase (SEI). The C2-C4 alkene substituted with a halogen atom, as a small molecular substance, has a higher solubility in the electrolyte and is more easily dispersed in the electrolyte. Thus, the thickness uniformity of the solid electrolyte interphase may be improved, and the uniform performance of the solid electrolyte interphase can be guaranteed. In addition, a gaseous C2-C4 alkene substituted with a halogen atom is relatively low-cost as industrial feedstocks. The partially halogenated saturated polyalkene refers to a polymer that contains a halogen atom in its repetitive structural unit and has a hydrogen atom. As an example, the repetitive structural unit of the partially halogenated saturated polyalkene is one or more of fluoroethene, 1,1-difluoroethylene, 1,2-difluoroethylene, fluoropropylene, 1,1-difluoropropylene, 1,2,3-trifluoropropylene, fluorobutene, chloroethylene, 1,1-dichloroethylene, 1,2-dichloroethylene, perchloroethylene, chloropropene, 1,1-dichloropropylene, 1,2,3-trichloropropylene, and chloroprene.

The partially halogenated saturated polyalkene refers to a polymer that contains a halogen atom in the repetitive structural unit and has a hydrogen atom. As an example, the repetitive structural unit of the partially halogenated saturated polyalkene is one or more of fluoroethene, 1,1-difluoroethylene, 1,2-difluoroethylene, fluoropropylene, 1,1-difluoropropylene, 1,2,3-trifluoropropylene, fluorobutene, chloroethylene, 1,1-dichloroethylene, 1,2-dichloroethylene, perchloroethylene, chloropropene, 1,1-dichloropropylene, 1,2,3-trichloropropylene, and chloroprene.

In an embodiment of the present application, the electrolyte is provided with the C2-C4 alkene substituted with a halogen atom and the partially halogenated saturated polyalkene, which can undergo an electrochemical reduction reaction on the surface of the negative electrode active material to generate a halogen-containing solid electrolyte interphase. On the one hand, the generated halogen-containing solid electrolyte interphase has lower interface resistance, which makes the secondary battery have a better low temperature performance. On the other hand, it can reduce the risk of a direct contact between the electrolyte and the negative electrode active material, reduce the risk of a reduction reaction of the electrolyte, thereby improving the life of secondary battery.

In some embodiments, the C2-C4 alkene substituted with a halogen atom comprises one or more of compounds represented by Formula I, 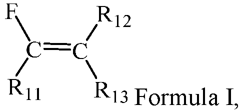 wherein R₁₁ to R₁₃ are each independently selected from a hydrogen atom, a halogen atom, or a halogen atom substituted or unsubstituted C1-C2 alkyl, and a number of carbon atoms in R₁₁ to R₁₃ adds up to 0, 1 or 2.

Optionally, R₁₁ to R₁₃ are each independently selected from a hydrogen atom, a fluorine atom, or -CF3.

In an embodiment of the present application, the C2-C4 alkene substituted with a halogen atom is more easily controlled in its solubility in electrolyte and facilitates its electrochemical reaction with the negative electrode active material.

Optionally, the halogen atom comprises a fluorine atom or a chlorine atom; and further optionally, the halogen atom comprises a fluorine atom. The fluorine and chlorine atoms, especially fluorine atoms, have a relatively high potential, which is conducive to participate in the electrochemical reaction to form the SEI. In other words, the C2-C4 alkene substituted with a fluorine atom is more conducive to participate in the electrochemical reaction to form the SEI.

As an example, the C2-C4 alkene substituted with a halogen atom comprises one or more compounds represented by Formulas (I-1) to (I-5),

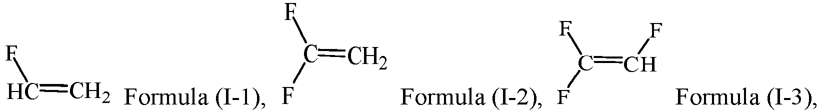

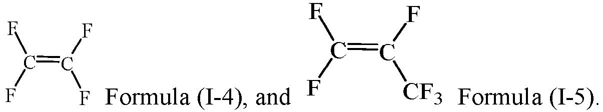

In some embodiments, the C2-C4 alkene substituted with a halogen atom has a mass percentage *a* that satisfies 0.05%≤*a*≤10%, by weight of the electrolyte.

The inventors found that when the mass percentage *a* of the C2-C4 alkene substituted with a halogen atom is less than 0.05%, the C2-C4 alkene substituted with a halogen atom is too low in the electrolyte, and the SEI formed by the C2-C4 alkene substituted with a halogen atom in the negative electrode active material is not dense enough, which may not effectively protect the interface of the negative electrode plate.

The C2-C4 alkene substituted with a halogen atom is gaseous at ambient temperature such as 25 °C. When the mass percentage *a* of the C2-C4 alkene substituted with a halogen atom is greater than 10%, the C2-C4 alkene substituted with a halogen atom is too high in the electrolyte and may exceed its own solubility. As a result, part of the C2-C4 alkene substituted with a halogen atom may volatilize, and the volatilization process may affect the storage stability of the electrolyte.

In view of the above problems, the inventors set the mass percentage *a* of the C2-C4 alkene substituted with a halogen atom to 0.05%≤*a*≤10%, and optionally 0.1% ≤*a*≤ 1%. The C2-C4 alkene substituted with a halogen atom in the above range of the mass percentage may be stably dissolved in the electrolyte and may form a dense protective film on the surface of the negative electrode active material, thereby playing a good protective role on the negative electrode plate.

In some embodiments, the partially halogenated saturated polyolefin comprises one or more of a structural unit represented by Formula II, and the partially halogenated saturated polyolefin comprises at least one structural unit of a partially halogenated alkene, 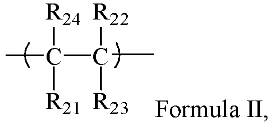 wherein R₂₁ to R₂₄ are each independently selected from a hydrogen atom, a halogen atom, or a linear or branched C1-C8 alkyl substituted or unsubstituted with a halogen atom; and optionally, R₂₁ to R₂₄ are each independently selected from a hydrogen atom, a fluorine atom, or -CF3; and the partially halogenated saturated polyolefin has a total polymerization degree *m* that satisfies 1 < *m*≤220, and *m* is a positive integer; optionally, 4 < *m*≤220.

Such partially halogenated saturated polyalkene has a relatively low molecular weight and a relatively high solubility with other substances in the electrolyte. It is beneficial to control an electrochemical reduction reaction of the partially halogenated saturated polyalkene on the surface of the negative electrode active material.

Optionally, the halogen atom comprises a fluorine atom or a chlorine atom; and further optionally, the halogen atom comprises a fluorine atom. The fluorine and chlorine atoms, especially fluorine atoms, have a relatively high potential, which is conducive to participate in the electrochemical reaction to form the SEI. In other words, the partially fluorinated saturated polyalkene is more conducive to participate in the electrochemical reaction to form the SEI.

In particular, the partially halogenated saturated polyolefin comprises one or more of the structural unit represented by Formulas (II-1) to (II-5), and the partially halogenated saturated polyolefin comprises at least one structural unit of a partially fluorinated alkene;

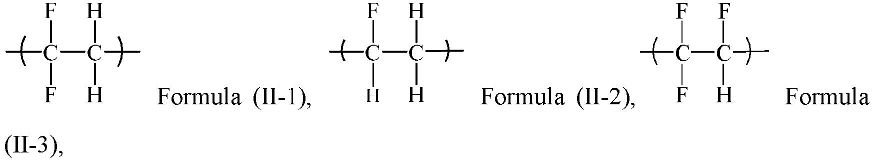

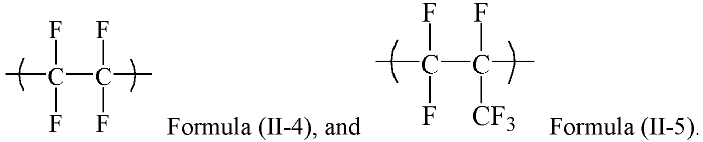

As an example, the partially halogenated saturated polyalkene may be the following polymers, 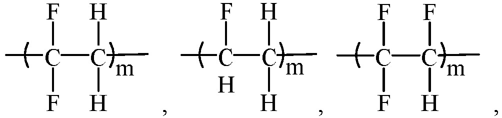 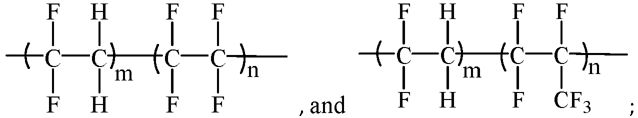 wherein m and n are positive integers.

Optionally, the partially halogenated saturated polyolefin has a weight average molecular weight of less than or equal to 10000Da; and further optionally, the partially halogenated saturated polyolefin has a weight average molecular weight of 200Da to 10000Da. The partially halogenated saturated polyalkene has a relatively low weight average molecular weight, and it is more easily dissolved in the electrolyte, thereby facilitating the formation of the SEI by an electrochemical reaction on the surface of the negative electrode active material.

In some embodiments, the partially halogenated saturated polyolefin has a mass percentage b that satisfies 0.05%≤*a*≤10%, optionally, 0.1%≤*a*≤1%, by weight of the electrolyte.

On the one hand, the partially halogenated saturated polyalkene in the above range of the mass percentage can form a dense and stable SEI on the surface of the negative electrode active material. On the other hand, it can maintain a certain viscosity, which is relatively low, thus reducing an adverse effect on the migration of metal ions, ensuring transmission characteristics of the metal ions in the electrolyte, and then ensuring the electrochemical performance of the secondary battery.

In an embodiment of the present application, the electrolyte is in a liquid state and plays a role of conducting metal ions between the positive electrode plate and the negative electrode plate.

In some embodiments, the electrolyte may comprise an electrolyte salt and a solvent.

Optionally, the electrolyte salt may be selected from at least one of lithium hexafluorophosphate, lithium tetrafluoroborate, lithium perchlorate, lithium hexafluorasoate, lithium bis(fluorosulfonyl)imide, lithium bis(trifluoromethanesulfonyl)imide, lithium trifluoromethanesulfonate, lithium difluorophosphate, lithium difluororo(oxalate)borate, lithium bis(oxalate)borate, lithium bis(oxyalyl)difluorophosphate, and lithium tetrafluoro(oxalato)phosphate.

Optionally, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butyl carbonate, fluorinated ethylene carbonate, methyl formate, methyl acetate, ethyl acetate, propyl acetate, methyl propionate, ethyl propionate, propyl propionate, methyl butyrate, ethyl butyrate, 1,4-butyrolactone, cyclobutyl sulfone, dimethyl sulfone, methyl ethyl sulfone, and diethyl sulfone.

Optionally, the electrolyte may also comprise an additive. For example, the additive may comprise other negative film forming additives, positive film forming additives, and may also comprise additives that can improve some performance of the battery, such as additives that improve the overcharge performance of the battery, additives that improve the high or low temperature performance of the battery, and the like.

### Secondary battery

In a second aspect, the present application provides a secondary battery. The secondary battery comprises a positive electrode plate, a negative electrode plate, a separator and an electrolyte. The separator is arranged between the positive electrode plate and the negative electrode plate to separate the positive electrode plate from the negative electrode plate. The electrolyte is the electrolyte in the first aspect of the present application.

In the secondary battery of the embodiment of the present application, the electrolyte may form a stable SEI on the surface of the negative electrode material. The SEI may effectively protect the negative electrode active material and ensure the structural stability of the negative electrode active material, thereby improving the low temperature performance and service life of the secondary battery.

Optionally, the positive electrode plate comprises a lithium element and/or a sodium element. During the charge and discharge process of the secondary battery, lithium ions and/or sodium ions, as active ions, are able to migrate stably between the positive electrode plate and the negative electrode plate, thereby ensuring the electrochemical performance of the secondary battery.

### [Positive electrode plate]

The positive electrode plate comprises a positive electrode current collector and a positive electrode film layer provided on at least one surface of the positive electrode current collector. The positive electrode film layer comprises a positive electrode active material.

As an example, the positive electrode current collector has two opposite surfaces in the direction of its own thickness, and the positive electrode film layer is provided on one or two of the two opposite surfaces of the positive electrode current collector.

In some embodiments, the positive electrode current collector may be used in the form of a metal foil or a composite current collector. As an example of the metal foil, aluminum foil can be used as the positive electrode current collector. The composite current collector may comprise a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, and the like) on the polymer material base layer (such as a base layer of polypropylene (PP), polyethylene terephthalate (PET), polyethylene terephthalate (PBT), polystyrene (PS), polyethylene (PE), and the like).

In some embodiments, the positive electrode active material may adopt positive electrode active materials known in the art for batteries. As an example, the positive active material may comprise at least one of olivine-structured lithium-containing phosphates, lithium transition metal oxides, and their respective modified compounds. However, the present application is not limited to these materials, and other conventionally known materials that can be used as positive electrode active materials for batteries can also be used. These positive electrode active materials can be used alone or in combination of two or more. Examples of lithium transition metal oxides may include, but are not limited to, at least one of lithium cobalt oxide (such as LiCoO₂), lithium nickel oxide (such as LiNiO₂), lithium manganese oxide (such as LiMnO₂ andLiMn₂O₄), lithium nickel cobalt oxide, lithium manganese cobalt oxide, lithium nickel manganese oxide, lithium nickel cobalt manganese oxide (Such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (such as LiNi_{0.85}Co_{0.15}Al_{0.05}O₂) and their respective modified compounds. Examples of olivine-structured lithium-containing phosphates may include, but are not limited to, at least one of lithium iron phosphate (such as LiFePO₄, also abbreviated as LFP), composites of lithium iron phosphate with carbon, lithium manganese phosphate (such as LiMnPO₄), composites of lithium manganese phosphate with carbon, lithium iron manganese phosphate, composites of lithium iron manganese phosphate with carbon.

In some embodiments, the positive electrode film layer may also optionally comprise a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer may also optionally comprise a conductive agent. As an example, the conductive agent may comprise at least one of superconducting carbon, acetylene black, carbon black, Ketjen black, carbon dots, carbon nanotubes, graphene, and carbon nanofibers.

In some embodiments, the positive electrode plate may be prepared by the following steps: dispersing the above components for preparing the positive electrode plate, such as the positive electrode active material, the conductive agent, the binder, and any other components in a solvent (e.g., N-methylpyrrolidone) to form a positive electrode slurry; coating the positive electrode slurry on the positive electrode current collector, drying and cold pressing to obtain the positive electrode plate.

### [Negative electrode plate]

The negative electrode plate comprises a negative electrode current collector and a negative electrode film layer provided on at least one surface of the negative electrode current collector. The negative electrode film layer comprises a negative electrode active material.

As an example, the negative electrode current collector has two opposite surfaces in the direction of its own thickness, and the negative electrode film layer is provided on one or two of the two opposite surfaces of the negative electrode current collector.

In some embodiments, the negative electrode current collector can be used in the form of a metal foil or a composite current collector. As an example of the metal foil, a copper foil can be used. The composite current collector may comprise a polymer material base layer and a metal material layer formed on at least one surface of the polymer material base layer. The composite current collector may be formed by forming a metal material (copper, copper alloy, nickel, nickel alloy, titanium, titanium alloy, silver, and silver alloy, and the like) on the polymer material base layer (such as a base layer of polypropylene (PP), polyethylene terephthalate (PET), polyethylene terephthalate (PBT), polystyrene (PS), polyethylene (PE), and the like).

In some embodiments, the negative electrode active material may adopt negative electrode active materials known in the art for batteries. As an example, the negative active material may comprise at least one of artificial graphite, natural graphite, soft carbon, hard carbon, silicon-based material, tin-based material, and lithium titanate. The silicon-based material may be selected from at least one of elemental silicon, silicon-oxygen compounds, silicon-carbon composites, silicon-nitrogen composites and silicon alloys. The tin-based material may be selected from at least one of elemental tin, tin oxide compounds and tin alloys. However, the present application is not limited to these materials, and other conventionally known materials that can be used as negative electrode active materials for batteries can also be used. These negative electrode active materials may be used alone or in combination of two or more.

In some embodiments, the negative electrode film layer may also optionally comprise a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may also optionally comprise a conductive agent. The conductive agent may be selected from at least one of superconducting carbon, acetylene black, carbon black, Ketjen black, carbon dots, carbon nanotubes, graphene, and carbon nanofibers.

In some embodiments, the negative film layer may optionally comprise other additives, for example thickeners (such as sodium carboxymethyl cellulose CMC-Na).

In some embodiments, the negative electrode plate may be prepared by the following steps: dispersing the above components for preparing the negative electrode plate, such as the negative electrode active material, the conductive agent, the binder, and any other components in a solvent (e.g., deionized water) to form a negative electrode slurry; coating the negative electrode slurry on the negative electrode current collector, drying and cold pressing to obtain the negative electrode plate.

### [Separator]

In some embodiments, the secondary battery further comprises a separator. There is no particular limitation on the type of separator in the present application, and any well-known porous-structure separator with good chemical stability and mechanical stability can be selected.

In some embodiments, materials of the separator can be selected from at least one of glass fibers, non-woven fabrics, polyethylene, polypropylene and polyvinylidene fluoride, without particular limitation. The separator can be a single-layer film or a multi-layer composite film. When the separator is a multi-layer composite film, materials of each layer can be the same or different, without particular limitation.

In some embodiments, the positive electrode plate, the negative electrode plate, and the separator may form the electrode assembly through a coiling process or a lamination process.

In some embodiments, the secondary battery comprises an outer package. The outer package is used to encapsulate the electrode assembly and the electrolyte.

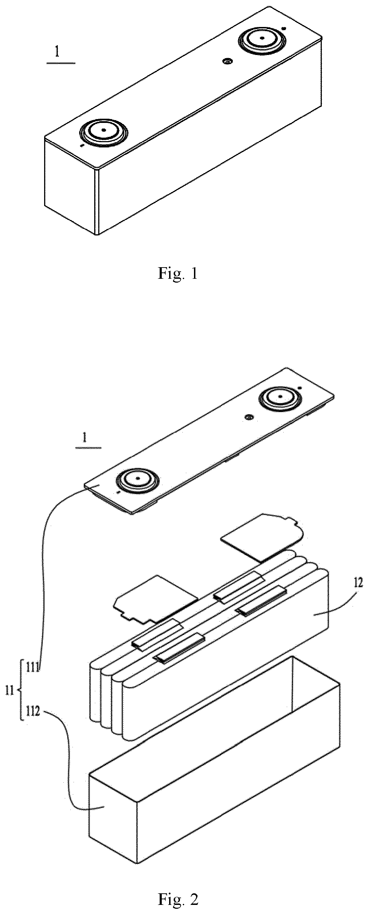

In some embodiments, the outer package of the secondary battery may be a hard case, such as a hard plastic case, an aluminum case, a steel case, and the like. The outer package of the secondary battery may also be a soft package, such as a pouch-type soft package. Material of the soft package can be plastic, such as polypropylene, polybutylene terephthalate, and polybutylene succinate. The shape of the secondary battery is not particularly limited in the present application, and it may be cylindrical, square or any other shape. Figs. 1 and 2 are a schematic diagram of a secondary battery 1 of a square structure as an example.

In some embodiments, a secondary battery 1 comprises an outer package 11. The outer package 11 comprises a top cover assembly 111 and a case 112. A positive electrode plate, a negative electrode plate and a separator constitute an electrode assembly 12 which is accommodated in the case 112. The electrolyte is also accommodated in the case 112. The positive electrode plate or the negative electrode plate comprises a lug. During the charge and discharge process of the secondary battery 1, active ions are intercalated and deintercalated between the positive electrode plate and the negative electrode plate. The electrolyte plays a role of conducting ions between the positive electrode plate and the negative electrode plate. The separator is arranged between the positive electrode plate and the negative electrode plate, which mainly plays a role of preventing the short circuit of the positive and negative electrodes, and allowing the active ions pass through. Specifically, the secondary battery 1 may be a coiled or laminated battery, such as a lithium-ion battery or a sodium-ion battery, but is not limited to this.

Optionally, the case 112 may comprise a bottom plate and side plates connected to the bottom plate, and the bottom plate and the side plates are enclosed to form an accommodating cavity. The case 112 has an opening communicating with the accommodating cavity, and the top cover assembly 111 is used to cover the opening to close the accommodating cavity. The positive electrode plate, the negative electrode plate, and the separator may form the electrode assembly 12 through a coiling process or a lamination process. The electrode assembly 12 is packaged in the accommodating cavity, and the electrolyte is infiltrated in the electrode assembly 12. The number of electrode assemblies 12 contained in the secondary battery 1 may be one or several, and may be adjusted according to requirements.

In some embodiments, the secondary battery 1 may be assembled into a battery. The battery may be a battery module or a battery pack. For example, the number of secondary battery 1 included in the battery module may be one or more, and the specific number may be selected by the person skilled in the art according to the application and capacity of the battery module.

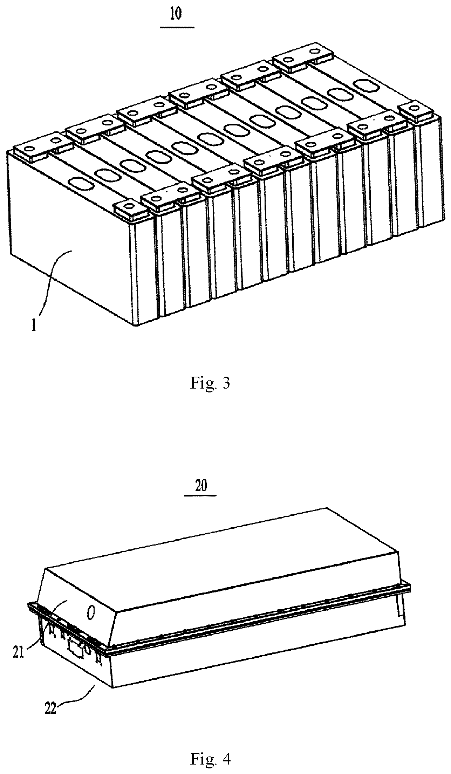

Fig. 3 is a battery module 10 as an example. Referring to Fig. 3, in the battery module 10, a plurality of secondary batteries 1 may be arranged in sequence along the length direction of the battery module 10. Of course, it can be arranged in any other way. Further, the plurality of secondary batteries 1 may be fixed by fasteners. Optionally, the battery module 10 may further comprise a housing having an accommodating space in which a plurality of secondary batteries 1 are accommodated.

In some embodiments, the above battery module 10 may also be assembled into a battery pack, the number of battery module 10 included in the battery pack may be one or more, and the specific number may be selected by the person skilled in the art according to the application and capacity of the battery pack. Of course, the battery pack may also be composed of multiple secondary batteries 1 directly.

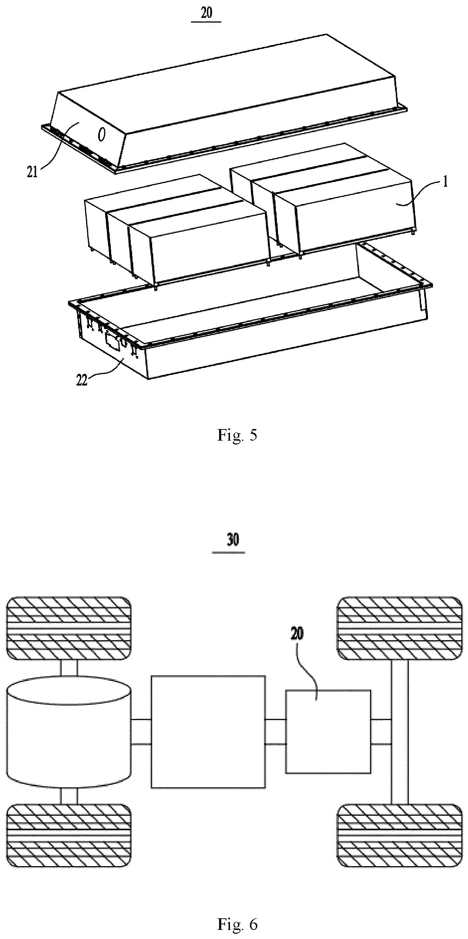

Figs. 4 and 5 show the battery pack 20 as an example. Referring to Figs. 4 and 5, the battery pack 20 may comprise a battery case and multiple battery modules 10 arranged in the battery case. The battery case includes an upper casing 21 and a lower casing 22 which is covered by the upper casing 21, and forms an enclosed space for accommodating the battery module 10. The multiple battery modules 10 may be arranged in the battery case in any way.

In addition, the present application provides an electrical device comprising at least one of the secondary battery, battery module, and battery pack of the present application. The secondary battery, battery module or battery pack can be used as a power source of the electrical device, and can also be used as an energy storage unit of the electrical device. The electrical device comprises, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like. The electrical device can select a secondary battery, a battery module or a battery pack according to its usage requirements.

Fig. 6 is a schematic diagram of an electrical device 30 as an example. The electrical device 30 is a pure electric vehicle, a hybrid electric vehicle, or a plug-in hybrid electric vehicle. In order to meet high power and high energy density requirements of the secondary battery in the electrical device 30, a battery pack or a battery module can be used. As another example, the electrical device may be a mobile phone, a tablet computer, a notebook computer, and the like. The electric device is generally required to be light and thin, and a secondary battery can be used as a power source.

### EXAMPLES

Hereinafter, examples of the present application are described. The examples described below are exemplary and are intended to explain the present application only, but not construed as limiting the present application. Where specific techniques or conditions are not indicated in the examples, the techniques or conditions described in the literature in the art or in accordance with the product specification are followed. The reagents or instruments used were conventional products that can be purchased through the market, if the manufacturer was not indicated.

### Examples 1 to 23 and comparative example 1

### 1. Preparation of positive electrode plate

Aluminum foil with a thickness of 8 µm was used as a positive electrode current collector. A positive electrode active material LiNi_{1/3}Co_{1/3}Mn_{1/3}O₂(NCM₃₃₃), a conductive carbon black, a binder polyvinylidene fluoride (PVDF) were mixed in an appropriate amount of N-methylpyrrolidone (NMP) solvent at a weight ratio of 93:2:5 to form a uniform positive electrode slurry, the positive electrode slurry was coated on the surface of the positive electrode current collector, and the positive electrode plate was obtained after drying process.

2. Preparation of negative electrode plate: A negative electrode active material graphite, a conductive carbon black, a thickener sodium carboxymethyl cellulose (CMC), a binder styrene-butadiene rubber (SBR) were mixed in an appropriate amount of deionized water at a weight ratio of 96.5: 1.0: 1.0: 1.5 to form a uniform negative electrode slurry, the negative electrode slurry was coated on the negative electrode current collector, and the negative electrode plate was obtained after drying process.

3. Preparation of electrolyte: Ethylene carbonate (EC) and ethyl methyl carbonate (EMC) were mixed in a volume ratio of 3:7 to obtain an organic solvent, and then the negative electrode film forming additive and 1 mol/L LiPF₆ were uniformly dissolved in the above organic solvent, wherein the type and mass percentage of the negative electrode film forming additive are shown in Tables 1 and 2.

### 4. Preparation of secondary battery

The positive electrode plate, the separator (PP/PE/PP composite film), and the negative electrode plate were stacked in turn, and then rolled into an electric core and packed into a packaging shell. The electrolyte was injected into the electric core. The secondary battery was obtained after processes of sealing, standing, hot and cold pressing, and forming.

**Table 1**

| Serial number | Negative electrode film forming additive | |
|---|---|---|
| | Type | Mass percentage /% |
| Example 1 | Perfluoroethylene | 0.05 |
| Example 2 | Perfluoroethylene | 0.1 |
| Example 3 | Perfluoroethylene | 0.5 |
| Example 4 | Perfluoroethylene | 1 |
| Example 5 | Perfluoroethylene | 10 |
| Example 6 | Perfluoroethylene | 0.01 |
| Example 7 | Perfluoroethylene | 15 |
| Example 8 | 1,2-difluoroethylene | 0.5 |
| Example 9 | Perfluoroethylene and perfluoropropylene (weight ratio of 1: 1) | 0.5 |

**Table 2**

| Serial number | Negative electrode film forming additive | | |
|---|---|---|---|
| | Type | Mass percentage /% | Molecular weight /Da |
| Example 10 | 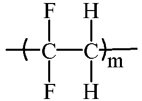 | 0.05 | 5000 |
| Example 11 | 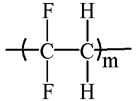 | 0.1 | 5000 |
| Example 12 | 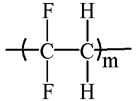 | 0.5 | 5000 |
| Example 13 | 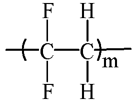 | 1 | 5000 |
| Example 14 | 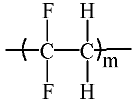 | 10 | 5000 |
| Example 15 | 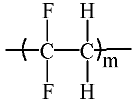 | 0.01 | 5000 |
| Example 16 | 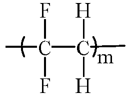 | 15 | 5000 |
| Example 17 | 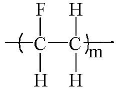 | 0.5 | 5000 |
| Example 18 | 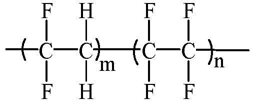 | 0.5 | 5000 |
| Example 19 | 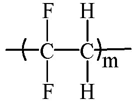 | 0.5 | 200 |
| Example 20 | 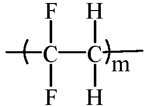 | 0.5 | 10000 |
| Example 21 | 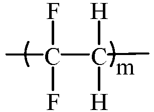 | 0.5 | 100 |
| Example 22 | 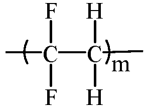 | 0.5 | 20000 |
| Example 23 | 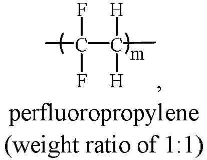 | 0.5 | 5000 |
| Comparative example 1 | - | - | - |

### Test section

### 1. Cycle performance test of the secondary battery

At 45 °C, the secondary battery was allowed for standing for 30 minutes, charged to 4.2V with a constant current of 1C, and further charged with a constant voltage of 4.2V to a current of 0.05C, allowed for standing for 5 minutes, and then discharged to 2.8V with a constant current of 1C. This was a cyclic charge-discharge process, which discharge capacity was the first discharge capacity of the battery. The battery was subjected to 1000 cyclic charge-discharge processes as described above, and the discharge capacity of the secondary battery after 1000 cycles was recorded.

Capacity retention rate of the secondary battery of 1000 cycles (%) = (discharge capacity after 1000 cycles/discharge capacity of the first cycle) ×100%.

### 2. Test of low temperature DC resistance (DCR)

The secondary battery was adjusted to a state of charge (SOC) of 20% of its capacity at room temperature, placed in a high-low temperature box at -25 °C, and allowed for standing for 2 hours to make the temperature of the secondary battery reach -25 °C. The voltage of the secondary battery at this time was tested and recorded as U1. The secondary battery was then discharged at a rate of 0.3C for 10 seconds. The voltage of the secondary battery after discharge was tested and recorded as U2.

The low temperature DCR of the secondary battery = (U1-U2)/I, wherein I represents a current.

### Test results

The role of the electrolyte in improving the low temperature performance and life of the secondary battery is shown in Table 3.

**Table 3**

| Serial number | Capacity retention rate of 1000 cycles at 45 °C | DCR at -25 °C/mΩ |
|---|---|---|
| Example 1 | 86.4% | 371.3 |
| Example 2 | 89.5% | 350.6 |
| Example 3 | 93.1% | 338.3 |
| Example 4 | 93.5% | 344.4 |
| Example 5 | 92.9% | 379.5 |
| Example 6 | 87.4% | 391.9 |
| Example 7 | 80.5% | 358.9 |
| Example 8 | 91.9% | 335.4 |
| Example 9 | 92.0% | 341.1 |
| Example 10 | 85.2% | 375.4 |
| Example 11 | 88.4% | 356.4 |
| Example 12 | 92.3% | 342.8 |
| Example 13 | 93.0% | 346.5 |
| Example 14 | 92.1% | 383.6 |
| Example 15 | 88.0% | 390.6 |
| Example 16 | 81.3% | 412.5 |
| Example 17 | 92.2% | 346.5 |
| Example 18 | 93.7% | 346.1 |
| Example 19 | 91.9% | 346.5 |
| Example 20 | 91.8% | 375.4 |
| Example 21 | 84.3% | 350.6 |
| Example 22 | 88.6% | 433.1 |
| Example 23 | 92.3% | 342.8 |
| Comparative example 1 | 63.4% | 453.8 |

As can be seen from the data in Table 3, compared to the comparative example 1, the C2-C4 alkene substituted with a halogen atom and the partially halogenated saturated polyalkene are added to the electrolyte in examples of the present application, and the capacity retention rate and DCR of the secondary battery can be significantly improved.

As can be seen from Examples 1 to 7, when the mass percentage of the C2-C4 alkene substituted with a halogen atom is 0.05% to 10%, especially when the mass percentage of the C2-C4 alkene substituted with a halogen atom is 0.1% to 1%, the capacity retention rate of the secondary battery is relatively high and the DCR is relatively low. In other terms, the cycle performance and low temperature performance of the secondary battery are significantly improved.

As can be seen from Examples 8 and 9, the cycle performance and low temperature performance of the secondary battery can also be improved by using a variety of C2-C4 alkenes substituted with a halogen atom.

As can be seen from Examples 10 to 16, when the mass percentage of the partially halogenated saturated polyalkene is 0.05% to 10%, especially when the mass percentage of the partially halogenated saturated polyalkene is 0.1% to 1%, the capacity retention rate of the secondary battery is relatively high and the DCR is relatively low. In other words, the cycle performance and low temperature performance of the secondary battery are significantly improved.

As can be seen from Examples 17 and 18, the cycle performance and low temperature performance of the secondary battery can also be improved by using a variety of partially halogenated saturated polyalkene.

As can be seen from Examples 12, 19 to 22, when the weight average molecular weight of the partially halogenated saturated polyalkene is less than 10000Da, especially between 200Da and 10000Da, the capacity retention rate of the secondary battery is relatively high, and the DCR is relatively low.

Compared to Examples 3 and 12, Example 23 uses both C2-C4 alkene substituted with a halogen atom and partially halogenated saturated polyalkene. In all three examples, the performance of the secondary battery can be significantly improved.

## Claims

1. An electrolyte for use in a secondary battery (1), comprising a C2-C4 alkene substituted with a halogen atom and a partially halogenated saturated polyalkene.

2. The electrolyte according to claim 1, wherein,
the C2-C4 alkene substituted with a halogen atom comprises one or more of compounds represented by Formula I, 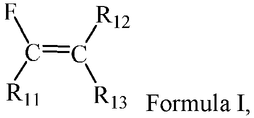
wherein R₁₁ to R₁₃ are each independently selected from a hydrogen atom, a halogen atom, or a halogen atom substituted or unsubstituted C1-C2 alkyl, and a number of carbon atoms in R₁₁ to R₁₃ adds up to 0, 1 or 2; optionally, the halogen atom comprises a fluorine atom or a chlorine atom; and
optionally, R₁₁ to R₁₃ are each independently selected from a hydrogen atom, a fluorine atom, or -CF3.

3. The electrolyte according to claim 1 or 2, wherein,
the C2-C4 alkene substituted with a halogen atom comprises one or more compounds represented by Formulas (I-1) to (I-5),

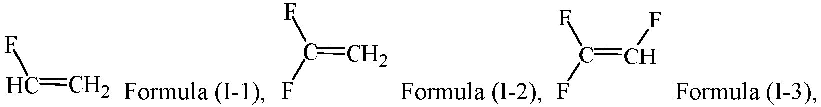

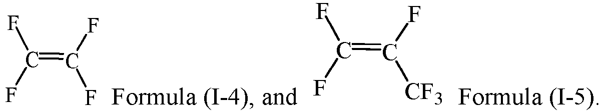

4. The electrolyte according to any one of claims 1 to 3, wherein,
the C2-C4 alkene substituted with a halogen atom has a mass percentage *a* that satisfies 0.05%≤*a*≤10%, and optionally 0.1%≤*a*≤1%, by weight of the electrolyte.

5. The electrolyte according to any one of claims 1 to 4, wherein,
the partially halogenated saturated polyolefin comprises one or more of a structural unit represented by Formula II, and the partially halogenated saturated polyolefin comprises at least one structural unit of a partially halogenated alkene, 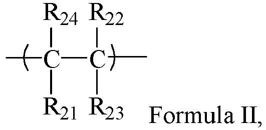
wherein R₂₁ to R₂₄ are each independently selected from a hydrogen atom, a halogen atom, or a linear or branched C1-C8 alkyl substituted or unsubstituted with a halogen atom; optionally, the halogen atom comprises a fluorine atom or a chlorine atom; and
optionally, R₂₁ to R₂₄ are each independently selected from a hydrogen atom, a fluorine atom, or -CF3; and
the partially halogenated saturated polyolefin has a total polymerization degree *m* that satisfies 1 < *m*≤220, and *m* is a positive integer; optionally, 4 < *m*≤220.

6. The electrolyte according to any one of claims 1 to 5, wherein,
the partially halogenated saturated polyolefin comprises one or more of the structural unit represented by Formulas (II-1) to (II-5), and the partially halogenated saturated polyolefin comprises at least one structural unit of a partially fluorinated alkene;

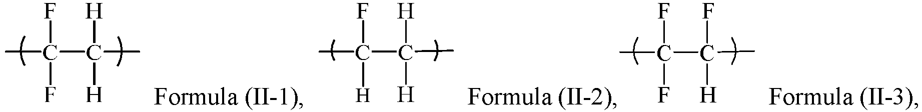

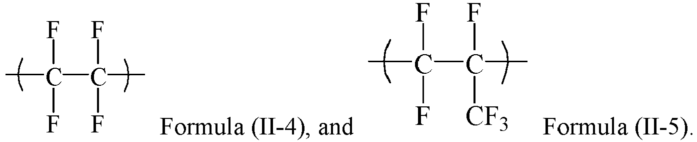

7. The electrolyte according to any one of claims 1 to 6, wherein,
the partially halogenated saturated polyolefin has a weight average molecular weight of less than or equal to 10000Da; and
optionally, the partially halogenated saturated polyolefin has a weight average molecular weight of 200Da to 10000Da.

8. The electrolyte according to any one of claims 1 to 7, wherein,
the partially halogenated saturated polyolefin has a mass percentage b that satisfies 0.05%≤*a*≤10%, optionally, 0.1%≤*a*≤1%, by weight of the electrolyte.

9. A secondary battery (1), comprising:
a positive electrode plate;
a negative electrode plate;
a separator arranged between the positive electrode plate and the negative electrode plate; and
the electrolyte according to any one of claims 1 to 8;
optionally, the positive electrode plate comprises a lithium element and/or a sodium element.

10. A battery module (10), comprising the secondary battery (1) according to claim 9.

11. A battery pack (20), comprising the battery module (10) according to claim 10.

12. An electrical device (30), comprising the secondary battery (1) according to claim 9, the battery module (10) according to claim 10, or the battery pack (20) according to claim 11.

## Patentansprüche

1. Elektrolyt zur Verwendung in einer Sekundärbatterie (1), umfassend ein C2-C4-Alken, das mit einem Halogenatom substituiert ist, und ein teilweise halogeniertes gesättigtes Polyalken.

2. Elektrolyt nach Anspruch 1, wobei
das C2-C4-Alken, das mit einem Halogenatom substituiert ist, eine oder mehrere von Verbindungen umfasst, die repräsentiert sind durch Formel I, 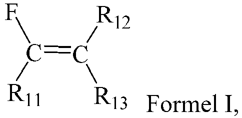
wobei R₁₁ bis R₁₃ jeweils unabhängig voneinander aus einem Wasserstoffatom, einem Halogenatom oder einem mit einem Halogenatom substituierten oder unsubstituierten C1-C2-Alkyl ausgewählt sind und eine Anzahl von Kohlenstoffatomen in R₁₁ bis R₁₃ insgesamt 0, 1 oder 2 beträgt; wobei das Halogenatom optional ein Fluoratom oder ein Chloratom umfasst; und
wobei optional R₁₁ bis R₁₃ jeweils unabhängig voneinander aus einem Wasserstoffatom, einem Fluoratom oder -CF3 ausgewählt sind.

3. Elektrolyt nach Anspruch 1 oder 2, wobei
das C2-C4-Alken, das mit einem Halogenatom substituiert ist, eine oder mehrere Verbindungen umfasst, die repräsentiert sind durch die Formeln (I-1) bis (I-5),

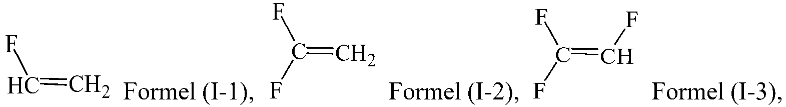

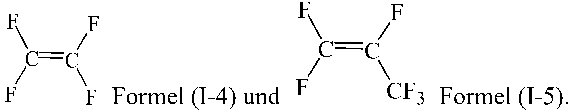

4. Elektrolyt nach einem der Ansprüche 1 bis 3, wobei
das C2-C4-Alken, das mit einem Halogenatom substituiert ist, einen Massenanteil *a* aufweist, der die Bedingung 0,05 % ≤ *a* ≤ 10 % und optional 0,1 % ≤ *a* ≤ 1 %, bezogen auf das Gewicht des Elektrolyten, erfüllt.

5. Elektrolyt nach einem der Ansprüche 1 bis 4, wobei,
das teilweise halogenierte gesättigte Polyolefin eine oder mehrere von einer Struktureinheit umfasst, die durch die Formel II repräsentiert ist, und das teilweise halogenierte gesättigte Polyolefin mindestens eine Struktureinheit eines teilweise halogenierten Alkens umfasst, 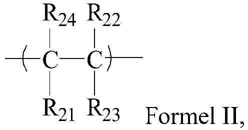
wobei R₂₁ bis R₂₄ jeweils unabhängig voneinander aus einem Wasserstoffatom, einem Halogenatom oder einem linearen oder verzweigten C1-C8-Alkyl, das mit einem Halogenatom substituiert oder unsubstituiert ist, ausgewählt sind; wobei optional das Halogenatom ein Fluoratom oder ein Chloratom umfasst; und
optional R₂₁ bis R₂₄ jeweils unabhängig voneinander aus einem Wasserstoffatom, einem Fluoratom oder -CF3 ausgewählt sind; und
das teilweise halogenierte gesättigte Polyolefin einen Gesamtpolymerisationsgrad *m* aufweist, der die Bedingung 1 < *m* ≤ 220 erfüllt, und m eine positive ganze Zahl ist; optional 4 < *m* ≤ 220.

6. Elektrolyt nach einem der Ansprüche 1 bis 5, wobei
das teilweise halogenierte gesättigte Polyolefin eine oder mehrere der Struktureinheiten umfasst, die durch die Formeln (II-1) bis (II-5) repräsentiert sind, und das teilweise halogenierte gesättigte Polyolefin mindestens eine Struktureinheit eines teilweise fluorierten Alkens umfasst;

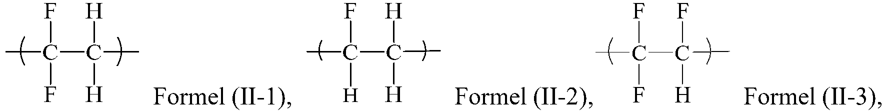

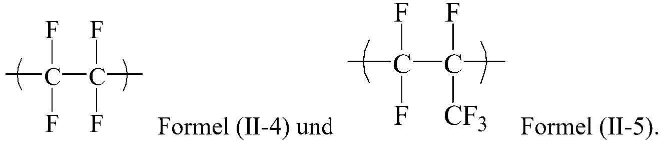

7. Elektrolyt nach einem der Ansprüche 1 bis 6, wobei
das teilweise halogenierte gesättigte Polyolefin ein gewichtsgemitteltes Molekulargewicht von kleiner oder gleich 10000 Da aufweist; und
optional, das teilweise halogenierte gesättigte Polyolefin ein gewichtsgemitteltes Molekulargewicht von 200 Da bis 10000 Da aufweist.

8. Elektrolyt nach einem der Ansprüche 1 bis 7, wobei
das teilweise halogenierte gesättigte Polyolefin einen Massenanteil b aufweist, der die Bedingung 0,05 *%* ≤ *a* ≤ 10 %, optional 0,1 % ≤ *a* ≤ 1 %, bezogen auf das Gewicht des Elektrolyten, erfüllt.

9. Sekundärbatterie (1), umfassend:
eine positive Elektrodenplatte;
eine negative Elektrodenplatte;
einen Separator, der zwischen der positiven Elektrodenplatte und der negativen Elektrodenplatte angeordnet ist; und
den Elektrolyten nach einem der Ansprüche 1 bis 8;
wobei optional die positive Elektrodenplatte ein Lithiumelement und/oder ein Natriumelement umfasst.

10. Batteriemodul (10), umfassend die Sekundärbatterie (1) nach Anspruch 9.

11. Batteriepack (20), umfassend das Batteriemodul (10) nach Anspruch 10.

12. Elektrische Vorrichtung (30), umfassend die Sekundärbatterie (1) nach Anspruch 9, das Batteriemodul (10) nach Anspruch 1 oder das Batteriepack (20) nach Anspruch 11.

## Revendications

1. Électrolyte destiné à être utilisé dans une batterie rechargeable (1), comprenant un alcène en C2-C4 substitué par un atome d'halogène et un polyalcène saturé partiellement halogéné.

2. Électrolyte selon la revendication 1, dans lequel
l'alcène en C2-C4 substitué par un atome d'halogène comprend un ou plusieurs des composés représentés par la formule I, 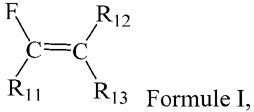
dans laquelle R₁₁ à R₁₃ sont chacun indépendamment choisis parmi un atome d'hydrogène, un atome d'halogène, ou un alkyle en C1-C2 substitué ou non substitué par un atome d'halogène, et un nombre d'atomes de carbone de R₁₁ à R₁₃ s'élève à 0, 1 ou 2 ; éventuellement, l'atome d'halogène comprend un atome de fluor ou un atome de chlore ; et
éventuellement, R₁₁ à R₁₃ sont chacun indépendamment choisis parmi un atome d'hydrogène, un atome de fluor, ou -CF3.

3. Électrolyte selon la revendication 1 ou 2, dans lequel,
l'alcène en C2-C4 substitué par un atome d'halogène comprend un ou plusieurs composés représentés par les formules (I-1) à (I-5),

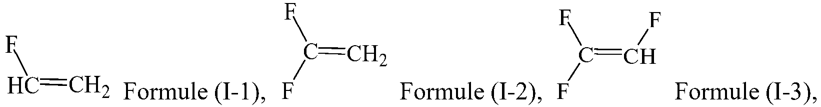

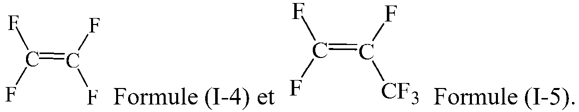

4. Électrolyte selon l'une quelconque des revendications 1 à 3, dans lequel
l'alcène en C2-C4 substitué par un atome d'halogène a un pourcentage massique *a* qui satisfait 0,05 % ≤ *a* ≤ 10 %, et éventuellement 0,1 % ≤ *a* ≤ 1 %, en poids de l'électrolyte.

5. Électrolyte selon l'une quelconque des revendications 1 à 4, dans lequel
la polyoléfine saturée partiellement halogénée comprend un ou plusieurs motifs structuraux représentés par la Formule II, et la polyoléfine saturée partiellement halogénée comprend au moins un motif structural d'un alcène partiellement halogéné, 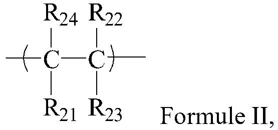
dans laquelle R₂₁ à R₂₄ sont chacun indépendamment choisis parmi un atome d'hydrogène, un atome d'halogène, ou un alkyle en C1-C8 linéaire ou ramifié substitué ou non substitué par un atome d'halogène ; éventuellement, l'atome d'halogène comprend un atome de fluor ou un atome de chlore ; et
éventuellement, R₂₁ à R₂₄ sont chacun indépendamment choisis parmi un atome d'hydrogène, un atome de fluor, ou -CF3 ; et
la polyoléfine saturée partiellement halogénée a un degré de polymérisation total *m* qui satisfait 1 *< m* ≤ 220, et *m* est un entier positif ; éventuellement, 4 < *m* ≤ 220.

6. Électrolyte selon l'une quelconque des revendications 1 à 5, dans lequel
la polyoléfine saturée partiellement halogénée comprend un ou plusieurs motifs structuraux parmi les motifs structuraux représentés par les Formules (II-1) à (II-5), et la polyoléfine saturée partiellement halogénée comprend au moins un motif structural d'un alcène partiellement fluoré ;

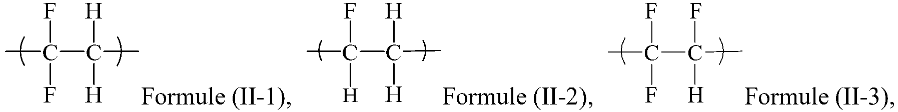

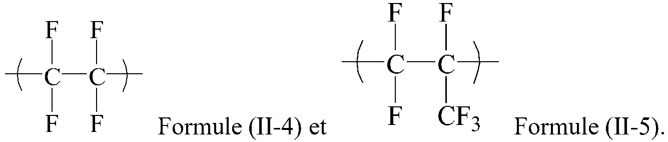

7. Électrolyte selon l'une quelconque des revendications 1 à 6, dans lequel
la polyoléfine saturée partiellement halogénée a un poids moléculaire moyen en poids inférieur ou égal à 10 000 Da ; et
éventuellement, la polyoléfine saturée partiellement halogénée a un poids moléculaire moyen en poids de 200 Da à 10 000 Da.

8. Électrolyte selon l'une quelconque des revendications 1 à 7, dans lequel
la polyoléfine saturée partiellement halogénée a un pourcentage massique b qui satisfait 0,05 %≤ *a* ≤ 10 %, éventuellement, 0,1 % ≤ *a* ≤ 1 %, en poids de l'électrolyte.

9. Batterie rechargeable (1), comprenant :
une plaque d'électrode positive ;
une plaque d'électrode négative ;
un séparateur agencé entre la plaque d'électrode positive et la plaque d'électrode négative ; et
l'électrolyte selon l'une quelconque des revendications 1 à 8 ;
éventuellement, la plaque d'électrode positive comprend un élément lithium et/ou un élément sodium.

10. Module de batterie (10) comprenant la batterie rechargeable (1) selon la revendication 9.

11. Bloc-batterie (20), comprenant le module de batterie (10) selon la revendication 10.

12. Dispositif électrique (30), comprenant la batterie rechargeable (1) selon la revendication 9, le module de batterie (10) selon la revendication 10 ou le bloc-batterie (20) selon la revendication 11.
